(19) Europäisches Patentamt European Patent Office Office européen des brevets

(11) **EP 2 209 741 B1**

(12) **EUROPÄISCHE PATENTSCHRIFT**

(45) Veröffentlichungstag und Bekanntmachung des Hinweises auf die Patenterteilung:
**16.01.2013 Patentblatt 2013/03**

(21) Anmeldenummer: **08803505.0**

(22) Anmeldetag: **02.09.2008**

(51) Int Cl.:
***C01G 53/00*** *(2006.01)*

(86) Internationale Anmeldenummer:
**PCT/EP2008/061530**

(87) Internationale Veröffentlichungsnummer:
**WO 2009/049955 (23.04.2009 Gazette 2009/17)**

(54) **PULVERFÖRMIGE NIAMBOX(OH)Y VERBINDUNGEN, VERFAHREN ZU DEREN HERSTELLUNG SOWIE DEREN VERWENDUNG IN BATTERIEN**

PULVERULENT NIAMBOX(OH)Y COMPOUNDS, PROCESSES FOR PREPARING THEM AND ALSO THEIR USE IN BATTERIES

COMPOSÉS EN POUDRE NIAMBOX(OH)Y, PROCÉDÉ POUR LEUR PRODUCTION ET LEUR UTILISATION DANS DES BATTERIES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.10.2007 DE 102007049108**

(43) Veröffentlichungstag der Anmeldung:
**28.07.2010 Patentblatt 2010/30**

(73) Patentinhaber: **H.C. Starck GmbH**
**38642 Goslar (DE)**

(72) Erfinder:
• **JAHN, Matthias**
**38642 Goslar (DE)**

• **MAIKOWSKE, Gerd**
**38642 Goslar (DE)**
• **MALCUS, Stefan**
**38642 Goslar (DE)**
• **MEESE-MARKTSCHEFFEL, Juliane**
**38642 Goslar (DE)**
• **OLBRICH, Armin**
**38723 Seesen (DE)**
• **ZERTANI, Rüdiger**
**38642 Goslar (DE)**

(56) Entgegenhaltungen:
**WO-A-2004/032260     WO-A-2007/019986
WO-A-2007/113102**

**Beschreibung**

Die vorliegende Erfindung betrifft pulverförmige Verbindungen der Formel $Ni_aM_bO_x(OH)_y$, ein Verfahren zur deren Herstellung, sowie deren Verwendung als Aktivmaterial für Nickelmetallhydridbatterien und/oder als Vorstoff für die Herstellung von Lithiumverbindungen für den Einsatz in Lithium-Sekundärbatterien. JP10027611 A offenbart die Synthese eines kogefällten Mischhydroxides, welches zumindest die beiden Metalle Nickel und Cobalt beinhaltet, aber nicht auf diese beschränkt ist. Das kogefällte Mischhydroxid wird zu Lithiummischmetalloxiden als Aktivmasse für Lithium-Sekundärbatterien weiterverarbeitet. Durch die Kofällung der Elemente auf der Stufe des Vorstoffes kann ein Lithiummischmetalloxid gefertigt werden, welches, eingesetzt in Lithium-Sekundärbatterien, zu einer Verbesserung des elektrochemischen Zyklenverhaltens führt. Der molare Nickelanteil in den Lithiummischmetalloxiden, bezogen auf die metallischen Elemente mit Ausnahme des Lithiums, beläuft sich dabei auf mindestens 70%.

In US 2002/0053663 A1 wird ein kogefälltes Nickel-Kobalt-Mangan-Hydroxid beansprucht, welches eine Klopfdichte von mindestens 1.5 g/cm$^3$ aufweist. Das kogefällte Mischhydroxid dient als Vorstoff zur Synthese von Lithium-Nickel-Kobalt-Mangan-Oxiden (LNCMO). Mit in dem Patent als 'konventionell' beschriebenen Prozessen lassen sich keine Mischhydroxide hoher Klopfdichte herstellen. Die hohe Klopfdichte des Mischhydroxides ist von so grosser Bedeutung, da sie einen positiven Effekt auf die Klopfdichte des Endproduktes hat, welche wiederum Einfluss auf die volumetrische Energiedichte in einer Lithium-Sekundärbatterie nimmt. In den Beispielen werden Pulver offenbart, deren Klopfdichten Werte zwischen 1.71 und 1.91 g/cm$^3$ aufweisen. Die mittlere Teilchengröße der Pulver beträgt dabei 5-20 μm. Mischhydroxide mit hoher Klopfdichte konnten in US 2002/0053663 A 1 erzielt werden, indem die Fällung entweder unter inerten oder sogar unter reduzierenden Bedingungen durchgeführt wurde.

US 2003/0054251 A1 beschreibt einen optimierten Verfahrensweg zur Synthese nickel- und manganhaltiger Mischoxide bzw. Mischhydroxide als Vorstoffe für die kathodische Aktivmasse in Lithium-Sekundärbatterien. Der Hauptgedanke dieser Erfindung ist, die bereits in der Literatur erwähnten, kogefällten Mischhydroxide (z.B. der Metalle Ni, Co, Mn) vor dem eigentlichen Ofenprozess thermisch bei 300 - 500°C vorzubehandeln, um einen sogenannten 'dry precursor' zu erhalten. Dieser 'dry precursor' wird dann mit einer Lithium-Komponente versetzt und durch eine Glühung zum LNCMO umgesetzt. Wird der beschriebene, getrocknete Vorstoff anstelle eines (ungetrockneten) Mischhydroxides eingesetzt, so wird gemäss dieser Schrift ein Endprodukt erhalten, welches sich durch eine höhere Produktkonstanz auszeichnet als Materialien, bei denen das ungetrocknete Mischhydroxid zum Einsatz kommt. Die Produktkonstanz der Materialien wurde bestimmt, indem mit jedem Material jeweils zwanzig Batterien gefertigt wurden und für diese zwanzig Batterien die Variation der Kapazitätsabnahme zwischen dem dritten und dem dreihundertsten elektrochemischen Zyklus evaluiert wurde.

Aus WO003004418 ist bekannt, dass die typische Korngrösse sphärischer Nickelhydroxide für den Einsatz in Nickelmetallhydridbatterien (nachfolgend NiMH abgekürzt) 5 bis 15 μm beträgt. Die Bedeutung der Klopfdichte des Nickelhydroxides zur Erzielung hoher Energiedichten in NiMH-Batterien ist ebenfalls in WO003004418 beschrieben. Eine Korrelation zwischen Klopfdichte und Partikelgrösse ist an dieser Stelle ebenso beschrieben. Die Schrift JP-10-097856 verfolgt mit ihrem Inhalt das Ziel möglichst dichte Nickelhydroxide herzustellen, welche als Aktivmaterial der positiven Elektrode von NiMH-batterien zum Einsatz kommen sollen. Desweiteren soll das Nickelhydroxid auch noch einen hohen Ausnutzungsgrad sowie eine gute Zyklenbeständigkeit bei hohen Temperaturen aufweisen. Das dichte Nickelhydroxid mit Klopfdichten von mindestens 2.0 g/cc (g/cm$^3$) wurde unter anderem durch Einstellung einer mittleren Teilchengrösse von 5 bis 20 μm erzielt.

Fierro et al., J. Electrochem. Soc. 153 (3) (2006), S. A492-A496, beschreiben in ihrer Arbeit ebenfalls verschieden dotierte Nickelhydroxide, die zum Einsatz als Aktivmaterial für NiMH-batterien vorgesehen sind. Auch bei den hier beschriebenen Nickelhydroxiden bewegen sich die Klopfdichten oberhalb von 2.0 g/cc, nämlich bei 2.15 bis 2.20 g/cc. Hier sind zur Erzielung solch hoher Klopfdichten mittlere Korngrössen erforderlich, die im Bereich von 8.3 bis 12.0 μm liegen.

Die nach dem zitierten Stand der Technik hergestellten Nickel-Mischmetallhydroxide werden sowohl als Ausgangsmaterialien zur Herstellung von Kathodenmaterialien für Lithium-Sekundärbatterien als auch direkt als Aktivmasse für NiMH-Batterien eingesetzt. Derartige Sekundärbatterien eignen sich nur bedingt für den Einsatz in Hybrid- und Elektrofahrzeugen. Für beide Typen von Fahrzeugen ist eine schnelle Entladung und Ladung der Batterien erforderlich, um hohe Beschleunigungen erzielen zu können und beim Abbremsen des Fahrzeuges dessen kinetische Energie mit möglichst geringen Wärmeverlusten wieder in elektrische Energie umzuwandeln. Bei feststehender Energie für einen bestimmten Beschleunigungs- oder Bremsvorgang ist die benötigte Entlade/Lade-Rate, ausgedrückt in ± Δ Gesamtkapazität/Δ t, umso geringer, je höher die Gesamtkapazität der Batterie ist. Es wird also nicht nur aus Platz- und Kostengründen sondern auch aus elektrischen Gründen angestrebt, eine möglichst hohe Volumenkapazität der Batterie zu haben. Beim reinen Elektrofahrzeug ist dieses darüber hinaus schon deshalb zwingend notwendig, weil die Kapazität naturgemäß den Aktionsradius bestimmt und dieser absolut entscheidend für die Marktfähigkeit dieser Fahrzeuge ist.

Aufgabe der vorliegenden Erfindung ist somit die Bereitstellung von Materialien, die es erlauben Sekundärbatterien mit hoher volumetrischer Energiedichte bei gleichzeitig hoher volumetrischer Leistungsdichte zu fertigen. Eine weitere Aufgabe besteht darin, für den sehr stark an Bedeutung gewinnenden Sektor der Hybridfahrzeuge und Elektrofahrzeuge (Electric Vehicles, EVs, Hybrid-PKW, -LKW, -Lokomotiven, - Fahrräder, -Mopeds, -Roller) Materialien bereitzustellen, die es erlauben Batterien zu bauen, welche diesen Fahrzeugen trotz hoher Beschleunigungswerte große Reichweiten ermöglichen.

Die Aufgabe der vorliegenden Erfindung ist auch ein Verfahren zur Herstellung von Materialien für Batterien und insbesondere für Sekundärbatterien zur Verfügung zu stellen.

Die Aufgabe wird gelöst durch eine pulverförmige Verbindung der Formel $Ni_aM_bO_x(OH)_y$. (später auch NMOOH, Nickelmischmetallhydroxid oder Nickelmischmetalloxyhydroxid genannt), wobei M mindestens ein Element ausgewählt aus der Gruppe bestehend aus Fe, Co, Zn, Mn, Al, Mg, Ca, Sr, La, Ce, Y, Yb und/oder deren Mischungen bedeutet, $0.6 \leq a < 1.0$, $0 < b \leq 0.4$, $0 < x \leq 0.6$ und $1.4 \leq y < 2.0$ sind, dadurch gekennzeichnet , dass der $D_{50}$-Wert der Partikelgrößenverteilung, gemessen nach ASTM B 822, $< 5\ \mu m$, und das Verhältnis von Klopfdichte, gemessen nach ASTM B 527, zu $D_{50}$-Wert der Partikelgrößenverteilung mindestens $0.4\ g/cm^3 \cdot \mu m$ beträgt.

Vorteilhafte pulverförmige Verbindungen gemäß der Erfindung sind Nickelmischmetallhydroxide, bei denen der $D_{50}$-Wert der Partikelgrößenverteilung $< 3\ \mu m$ beträgt. Bevorzugt weisen die erfindungsgemäßen pulverförmigen Verbindungen ein Verhältnis der Klopfdichte zu $D_{50}$-Wert der Partikelgrößenverteilung von mindestens $0.6\ g/cm^3 \cdot \mu m$, bevorzugt mindestens $0.7\ g/cm^3 \cdot \mu m$, besonders bevorzugt mindestens $0.8\ g/cm^3 \cdot \mu m$ auf.

Beispiele für pulverförmige Verbindungen, welche Teil der Erfindung sind, werden, ohne einschränkend zu wirken, in der folgenden Tabelle 1 angegeben.

Tabelle 1

| Nr. | a | | M | | b | x | y |
|---|---|---|---|---|---|---|---|
| 001 | Ni 0,984 | Co 0,016 | Zn 0,000 | Mg 0,000 | 0,016 | 0,01 | 1,99 |
| 002 | Ni 0,851 | Co 0,149 | Zn 0,000 | Mg 0,000 | 0,149 | 0,05 | 1,95 |
| 003 | Ni 0,800 | Co 0,200 | Zn 0,000 | Mg 0,000 | 0,200 | 0,08 | 1,92 |
| 004 | Ni 0,927 | Co 0,016 | Zn 0,057 | Mg 0,000 | 0,073 | 0,01 | 1,99 |
| 005 | Ni 0,925 | Co 0,016 | Zn 0,057 | Mg 0,002 | 0,075 | 0,01 | 1,99 |
| 006 | Ni 0,925 | Co 0,016 | Zn 0,057 | Ca 0,002 | 0,075 | 0,01 | 1,99 |
| 007 | Ni 0,919 | Co 0,024 | Zn 0,057 | Mg 0,000 | 0,081 | 0,01 | 1,99 |
| 008 | Ni 0,918 | Co 0,024 | Zn 0,057 | Mg 0,002 | 0,082 | 0,01 | 1,99 |
| 009 | Ni 0,917 | Co 0,024 | Zn 0,057 | Ca 0,002 | 0,083 | 0,01 | 1,99 |
| 010 | Ni 0,910 | Co 0,047 | Zn 0,043 | Mg 0,000 | 0,090 | 0,01 | 1,99 |
| 011 | Ni 0,908 | Co 0,047 | Zn 0,043 | Mg 0,002 | 0,092 | 0,01 | 1,99 |
| 012 | Ni 0,909 | Co 0,047 | Zn 0,043 | Fe 0,001 | 0,091 | 0,01 | 1,99 |
| 013 | Ni 0,676 | Co 0,156 | Mn 0,167 | Fe 0,000 | 0,324 | 0,10 | 1,90 |
| 014 | Ni 0,614 | Co 0,219 | Mn 0,168 | Fe 0,000 | 0,386 | 0,10 | 1,90 |
| 015 | Ni 0,672 | Co 0,078 | Mn 0,250 | Fe 0,000 | 0,328 | 0,07 | 1,93 |
| 016 | Ni 0,678 | Co 0,156 | Mn 0,000 | Fe 0,165 | 0,322 | 0,05 | 1,95 |
| 017 | Ni 0,669 | Co 0,000 | Mn 0,167 | Fe 0,164 | 0,331 | 0,05 | 1,95 |
| 018 | Ni 0,610 | Co 0,125 | Mn 0,134 | Fe 0,132 | 0,390 | 0,05 | 1,95 |
| 019 | Ni 0,733 | Co 0,139 | Al 0,128 | Fe 0,000 | 0,267 | 0,20 | 1,80 |
| 020 | Ni 0,789 | Co 0,200 | Sr 0,011 | Fe 0,000 | 0,211 | 0,06 | 1,94 |

Die pulverförmigen Nickelmischmetallhydroxide gemäß der Erfindung zeichnen sich besonders durch ihre BET-Oberflächen aus. Die BET-Oberfläche der Pulver, gemessen nach ASTM D 3663, beträgt mindestens 5 $m^2/g$, bevorzugt mindestens 7 $m^2/g$, besonders bevorzugt mindestens 10 $m^2/g$.

Überraschenderweise und im Gegensatz zum Stand der Technik wurde gefunden, dass die Klopfdichte der erfindungsgemäßen pulverförmigen Verbindungen trotz niedriger $D_{50}$-Werte sehr hohe Werte erreicht. Die Klopfdichte der pulverförmigen Verbindungen gemäß der Erfindung, gemessen nach ASTM B 527, beträgt $\geq 2.0\ g/cm^3$, bevorzugt

$\geq$ 2.1 g/cm$^3$, besonders bevorzugt $\geq$ 2.2 g/cm$^3$ und insbesondere bevorzugt $\geq$ 2.3 g/cm$^3$, Besonders bevorzugte pulverförmige Verbindungen zeichnen sich durch eine noch höhere Klopfdichte von $\geq$ 2.4 g/cm$^3$ aus.

Die Mischmetallhydroxide gemäß der Erfindung zeichnen sich durch eine besonders breite Komgrößenverteilung aus. Das Verhältnis von $D_{90}/D_{50}$, worin D Durchmesser der Pulverpartikel bedeutet, beträgt mindestens 1.8, bevorzugt mindestens 1.9, besonders bevorzugt mindestens 2.0. Besondere Mischmetallhydroxide gemäß der Erfindung weisen ein Verhältnis $D_{90}/D_{50}$ von mindestens 2.15 auf.

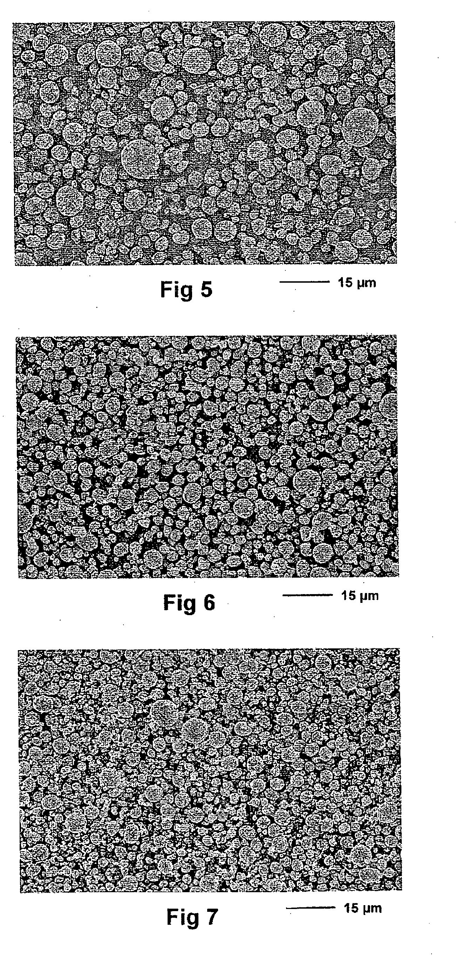

Die bevorzugten pulverförmigen Verbindungen gemäß der Erfindung zeichnen sich durch die sphäroidische Form der Partikel aus, deren Formfaktor einen Wert von $\geq$ 0.8, bevorzugt von $\geq$ 0.9, besonders bevorzugt von $\geq$ 0.95 aufweist. Der Formfaktor der Partikel kann nach der in US 5476530, Spalten 7 und 8 und Fig.5 genannten Methode bestimmt werden. Diese Methode ermittelt einen Formfaktor der Partikel, welcher ein Maß für die Sphäroidizität der Partikel ist. Der Formfaktor der Partikel kann auch aus den REM-Aufnahmen der Materialien bestimmt werden. Der Formfaktor wird durch die Evaluierung des Partikelumfangs sowie der Partikelfläche und der Bestimmung des aus der jeweiligen Größe abgeleiteten Durchmessers bestimmt. Die genannten Durchmesser ergeben sich aus

$$d_U = U/\pi \qquad\qquad d_A = \left(4A/\pi\right)^{\frac{1}{2}}.$$

Der Formfaktor der Partikel f leitet sich ab aus dem Partikelumfang U und der Partikelfläche A gemäß :

$$f = \left(\frac{d_A}{d_U}\right)^2 = \left(\frac{4\pi A}{U^2}\right)$$

Im Falle eines idealen sphärischen Partikels sind $d_A$ und $d_U$ gleich groß und es würde sich ein Formfaktor von genau eins ergeben.

Die Figuren 5 und 6 zeigen beispielhaft eine mit einem Rasterelektromenmikroskop (REM) aufgenommene Abbildung der Nickelmischmetallhydroxide, die gemäß den Beispielen 1 und 2 hergestellt wurden.

Die Formfaktoren der erfindungsgemäßen pulverförmigen Verbindungen sind mit Werten von $\geq$ 0.8 bemerkenswert hoch, angesichts der Tatsache, dass die Materialien Partikelgrößenverteitungen mit $D_{50}$-Werten von < 5.0 $\mu$m aufweisen.

Die Erfindung betrifft weiterhin ein neues Verfahren zur Herstellung pulverförmiger Verbindungen bestehend aus folgenden Schritten:

a) Bereitstellen von mindestens einer ersten und einer zweiten Eduktlösung,

b) Zusammenführen von mindestens der ersten und der zweiten Eduktlösung in einem Reaktor und Erzeugung einer homogen durchmischten Reaktionszone mit einem spezifischen mechanischen Leistungseintrag von mindestens 2 Watt/Liter (W/l) und Erzeugung einer Produktsuspension, bestehend aus unlöslichem Produkt und einer durch Einstellung eines Laugenüberschusses übersättigten Mutterlauge mit einem Laugenüberschuss von mindestens 0.12mol/l.

c) Partielle Abtrennung der Mutterlauge vom ausgefällten Produkt zur Einstellung von Feststoffgehalten von mindestens 150 g/l in der Suspension durch Klär-, oder Filterelemente.

Die hohe Feststoffkonzentration in der Suspension erhöht einerseits die Sphäroidizität der Teilchen und verringert andererseits deren Porosität. Beides führt zur Erhöhung der Klopfdichte der Pulver. Überraschenderweise weisen die pulverförmigen Verbindungen gemäß der Erfindung trotz geringer Porositäten vergleichsweise hohe BET-Werte auf. Üblicherweise sinkt die BET-Oberfläche mit fallender Porosität stark ab. Die Mischmetallhydroxide gemäß der Erfindung besitzen trotz geringen Porenvolumens eine relativ hohe innere Porenoberfläche. Das bedeutet, dass die Porenradien wesentlich kleiner sind und die Anzahl der Poren wesentlich größer ist als bei den Pulvern gemäß dem Stand der Technik. Die hohen Feststoffgehalte in der Suspension erlauben die Herstellung von sehr feinen sphäroidischen Pulvern mit hohen Formfaktoren. Bevorzugt wird das Verfahren gemäß der Erfindung mit Feststoffgehalten in der Suspension von mindestens 225 g/l, besonders bevorzugt von mindestens 250 g/l, insbesondere bevorzugt mindestens 300 g/l durchgeführt.

Der $D_{50}$-Wert der Partikel hängt von der primären und sekundären Keimbildung ab. Während die primäre Keimbildung durch hohe Übersättigungen, beispielsweise hohe Überschüsse an Alkaliauge begünstigt wird, ist für die sekundäre Keimbildung die mechanische Einwirkung durch Partikel-Partikel-Stöße bzw. Partikel-Rührer-Stöße maßgebend. Besonders feine und sphäroidische Partikel werden erhalten, wenn der Überschuss an Alkalilauge bevorzugt mindestens 0.12 mol/l, besonders bevorzugt mindestens 0.25 mol/l beträgt. Eine besondere Bedeutung für die sekundäre Keimbildung und die Entstehung sphäroidischer Partikel kommt dem mechanischen Leistungseintrag des Rührers in die Suspension zu. Der mechanische Leistungseintrag, später auch spezifischer Leistungseintrag genannt, wird als die durch den Rührer auf die Suspension übertragene Energie pro Zeit- und Volumeneinheit definiert. Der spezifische Energieeintrag in den Reaktor wird definiert als die durch den Rührer auf die Suspension übertragene Energie pro Volumeneinheit. Bevorzugt wird das erfindungsgemäße Verfahren bei einem spezifischen Leistungseintrag von mindestens 2.5 W/Liter (W/l), besonders bevorzugt mindestens 3 W/l durchgeführt.

Nach dem Verfahren gemäß der Erfindung können Nickelmischmetallhydroxide aus der Gruppe der Metalle Fe, Co, Zn, Mn, Al, Mg, Ca, Sr, La, Ce, Y, Yb hergestellt werden. Ausgegangen wird dabei von Eduktlösungen aus wasserlöslichen Salzen von Mineralsäuren, z.B. Schwefelsäure, Salzsäure oder Salpetersäure der vorbenannten Metalle.

Die Eduktlösungen können hergestellt werden, indem die betreffenden Metallchloride, Metallsulfate oder Metallnitrate in Wasser aufgelöst oder die Metalle in den entsprechenden Mineralsäuren gelöst werden (erste Eduktlösung). Die Alkalilaugen werden in der gewünschten Konzentration als wässrige Lösung bereitgestellt (zweite Eduktlösung).

Das Verfahren eignet sich bevorzugt zur Herstellung von Nickelmischmetallhydroxiden gemäß der Erfindung. Als Vorstoffe können wasserlösliche Metallsalze, z.B. Nickelsulfat, Nickelnitrat, Nickelchlorid und/oder deren Mischungen eingesetzt werden.

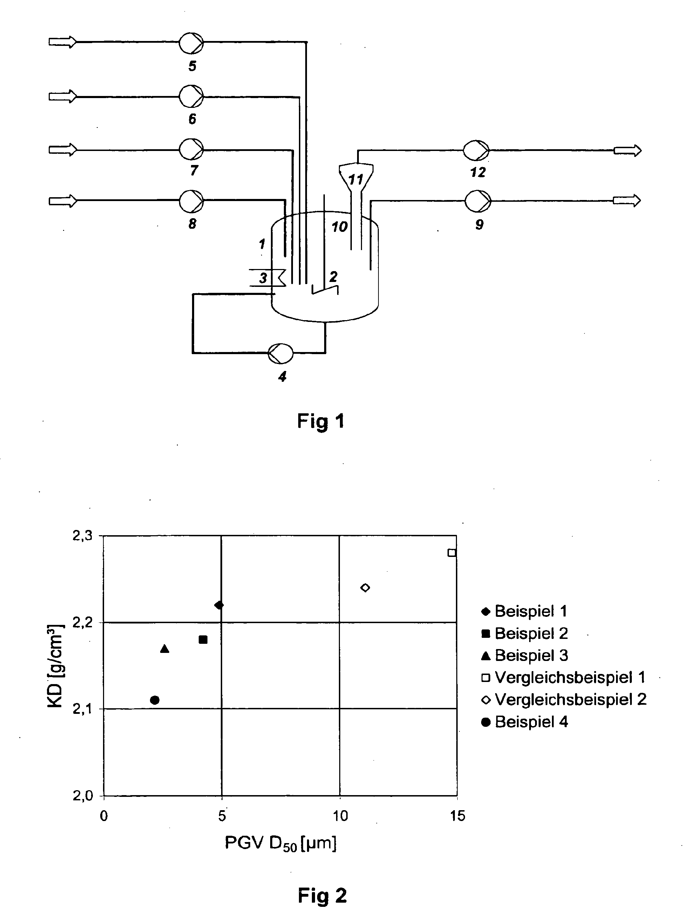

Die Herstellung der pulverförmigen Verbindung gemäß der Erfindung wird bevorzugt in einem in Figur 1 dargestellten Reaktor (1) durch Fällungskristallisation aus wässrigen Nickelsalzlösungen bei einer Alkalilaugen-Konzentration von mindestens 0.12 mol/l, durch die Zufuhr von Alkalihydroxydlösungen und gegebenenfalls Ammoniak, gasförmig oder als wässrige Lösung, durchgeführt. Als Alkalihydroxidlösungen werden bevorzugt Natriumhydroxid, sowie Kaliumhydroxid eingesetzt. Obwohl die Fällungskristallisation batchweise oder semi-kontinuierlich erfolgen kann, wird diese vorzugsweise kontinuierlich durchgeführt. Bei einem kontinuierlichen Verfahren erfolgt eine gleichzeitige Zufuhr von Metallsalzlösung, Alkalihydroxidlösung und Ammoniaklösung in den Reaktor und ein kontinuierlicher Abzug der Produktsuspension über einen freien Überlauf oder eine Pumpe. Die Temperatur in der Reaktionszone des Reaktors beträgt 20 bis 90°C, bevorzugt 40 bis 70°C, besonders bevorzugt 45 bis 60°C.

Die erfindungsgemäßen Nickelmischmetallhydroxide können bevorzugt in der, in Figur 1 dargestellten Anlage, hergestellt werden. Nachstehend wird das Verfahren gemäß der Erfindung etwas näher erläutert.

Ein Reaktor (1), ausgestattet mit Rührer (2), Thermostat (3) und Umlaufpumpe (4) wird zunächst mit Mutterlauge gefüllt, welche bereits die Salzkonzentration, NaOH-Konzentration und $NH_3$-Konzentration des späteren stationären Zustands aufweist. Nach Inbetriebnahme von Rührer, Begleitheizung und Umlaufpumpe werden über die Dosierpumpen (5), (6), (7) und (8) Metallsulfatlösung, Natronlauge, Ammoniak und gegebenenfalls Wasser zugeführt. Die entstehende Produktsuspension wird füllstandsgeregelt über die Pumpe (9) dem Reaktor entnommen. Der Reaktor ist weiterhin mit einem Tauchrohr (10) ausgestattet, welches am Ende einer konischen Aufweitung eine Filterplatte (11) besitzt. Mit der Pumpe (12) kann über dieses Filterelement Mutterlauge aus dem Reaktor entnommen werden. Hierdurch kann der Feststoffgehalt der Produktsuspension unabhängig von den Eduktkonzentrationen und der Salzkonzentration in der Mutterlauge eingestellt werden. Anstelle des Tauchrohres mit Filterelement kann die Mutterlauge auch über Hydrozyklone, Schrägklärer oder eine Querstromfiltration aus dem Reaktor abgetrennt werden.

Das Material wird jeweils im stationären Zustand nach 5 Verweilzeiten über einen Zeitraum von 24 Stunden gesammelt, auf einer Filternutsche filiert und mit 5 Liter Wasser pro kg gewaschen und anschließend im Trockenschrank bei Temperaturen bis zu 90°C bis zur Gewichtskonstanz getrocknet. Zur Erzielung einer homogen durchmischten Reaktionszone im Reaktor können alle gängigen Rührertypen verwendet werden. Besonders gute Ergebnisse werden mit Propellerrührern oder Scheibenrührern erzielt.

Die pulverförmigen Verbindungen gemäß der Erfindung eignen sich als Vorstoffe zur Herstellung von Sekundärbatterien. Die pulverförmigen Verbindungen gemäß der Erfindung werden als Vorstoff zur Herstellung von Lithiumverbindungen für Lithium-Sekundärbatterein eingesetzt. Insbesondere werden die pulverförmigen Verbindungen in Lithium-Ionenzellen bzw. Lithium-Polymerzellen verwendet. Die Nickelmischmetallhyroxide gemäß der Erfindung können besonders vorteilhaft als Aktivmaterial in Nickelmetallhydridbatterien eingesetzt werden.

Die Sekundärbatterien, die die erfindungsgemäßen Pulver enthalten, eignen sich besonders für den Einsatz in Hybrid-, Elektrofahrzeugen, Solarmobilen sowie in den mit Brennstoffzellen betriebenen Fahrzeugen.

Die Erfindung wird weiterhin durch folgende Beispiele und Vergleichsbeispiele erläutert.

**Beispiele**

Alle Beispiele und Vergleichsbeispiele wurden in dem Reaktor gemäß Figur 1 durchgeführt. Im Folgenden wird eine allgemeine Beschreibung zur Durchführung der Beispiele angegeben.

Allgemeine Beschreibung.

Der Reaktor (1) wird zunächst mit Mutterlauge gefüllt, welche die $Na_2SO_4$ -, NaOH-, sowie $NH_3$-Konzentration des jeweiligen stationären Reaktorzustandes aufweist. Dann werden Rührer (2); Thermostatheizung (3) und Umlaufpumpe (4) in Betrieb genommen. Nachdem die jeweilige Reaktionstemperatur erreicht ist, werden die gravimetrisch geregelten Pumpen (5) bis (8) in Betrieb genommen. Pumpe (5) fördert Metallsalzlösung, Pumpe (6) Natronlauge, Pumpe (7) Ammoniaklösung und Pumpe (8) voll entsalztes (VE) Wasser in den Reaktor. Anschließend wird Pumpe (9) gestartet, welche die entstehende Produktsuspension füllstandsgeregelt aus dem Raktor befördert. Dann wird die gravimetrisch geregelte, selbstansaugende Pumpe (12) in Betrieb genommen, die über ein Tauchrohr (10), in dessen oberem Teil eine Filterplatte (11) angeordnet ist, um die erforderliche Menge Mutterlauge aus dem Reaktorsystem zu entnehmen und den jeweils gewünschten Feststoffgehalt der Suspension einzustellen.

Beispiel 1

Der Reaktor (1) wurde mit Mutterlauge, enthaltend 133 g/l $Na_2SO_4$, 4.8 g/l NaOH und 11g/l $NH_3$ befüllt und der Rührer (2) mit 1000 UpM sowie die Umlaufpumpe (4) mit $10m^3$/h wurden in Betrieb genommen: Anschließend wurde mit der Thermostatheizung auf 50°C aufgeheizt. Nach Erreichung der Solltemperatur wurden, gravimetrisch geregelt, mit Pumpe (5) 11223 g/h Metallsulfatlösung (79.91 g/l Ni, 20.06 g/l Co), mit Pumpe (6) 7746 g/h Natronlauge (200 g/l NaOH) und mit Pumpe (7) 731 g/h Ammoniaklösung (225 g/l $NH_3$) in den Reaktor gefördert. Mit der Pumpe (12) wurden über das Tauchrohr (10) mit Filterelement (11) 8154 g/h Mutterlauge aus dem Reaktor entnommen. Die Pumpe (9) förderte füllstandsgeregelt im Mittel 11545 g/h Suspension aus dem Reaktor. Nach 100 Stunden hatte der Reaktor seinen stationären Zustand erreicht und die, ab diesem Zeitpunkt aus dem Reaktor abgeführte Suspension, wurde über einen Zeitraum von 24 h in einem Vorratsgefäß gesammelt, anschließend auf eine Filternutsche abgelassen und filtriert. Der Filterkuchen wurde mit 170 Liter VE-Wasser (vollentsalztes Wasser) gewaschen und anschließend in einem Trok-kenschrank auf Hordenblechen bei 85°C über 24 h getrocknet. Es wurden 34.4 kg trockenes Produkt mit folgenden Eigenschaften erhalten:

50.5% Ni, 12.8 % Co
Partikelgrößenverteilung (PGV) ($D_{10}$:1.4 $\mu$m, $D_{50}$: 4.9 $\mu$m, $D_{90}$: 9.7 $\mu$m), $D_{90}/D_{50}$: 1.98 Klopfdichte (KD): 2.22 g/cm$^3$
$KD/D_{50}$: 0.45 g/cm$^3\cdot\mu$m
BET: 7.3 m$^2$/g

Vergleichsbeispiel 1

Der Reaktor (1) wurde mit Mutterlauge, enthaltend 133 g/l $Na_2SO_4$, 4.8g/l NaOH und 11g/l $NH_3$ befüllt und der Rührer (2) mit 600 UpM sowie die Umlaufpumpe (4) mit $10m^3$/h wurden in Betrieb genommen. Anschließend wurde mit der Thermostatheizung auf 50°C aufgeheizt. Nach Erreichung der Solltemperatur wurden, gravimetrisch geregelt, mit Pumpe (5) 6328 g/h Metallsulfatlösung (79.91 g/l Ni, 20.06 g/l Co), mit Pumpe (6) 4367 g/h Natronlauge (200 g/l NaOH) und mit Pumpe (7) 412 g/h Ammoniaklösung (225 g/l $NH_3$) in den Reaktor gefördert. Die Pumpe (9) förderte füllstandsgeregelt im Mittel 11107 g/h Suspension aus dem Reaktor. Nach 100 Stunden hatte der Reaktor seinen stationären Zustand erreicht und die ab diesem Zeitpunkt aus dem Reaktor herrausgeförderte Suspension wurde über einen Zeitraum von 24 h in einem Vorratsgefäß gesammelt, anschließend auf eine Filternutsche abgelassen und filtriert. Der Filterkuchen wurde mit 100 Liter VE-Wasser gewaschen und anschließend in einem Trockenschrank auf Hordenblechen bei 85°C über 24 h getrocknet. Es wurden 19.3 kg trockenes Produkt mit folgenden Eigenschaften erhalten:

50.8% Ni, 12.7% Co
Partikelgrößenverteilung (PGV) ($D_{10}$: 5.8 $\mu$m, $D_{50}$-14.8 $\mu$m, $D_{90}$: 26.2 $\mu$m), $D_{90}/D_{50}$: 1.77 Klopfdichte (KD): 2.28 g/cm$^3$
$KD/D_{50}$: 0.150 g/cm$^3\cdot\mu$m
BET: 14.9 m$^2$/g

In der folgenden Tabelle 2 sind die Reaktorparameter und die Eigenschaften der erhaltenen Produkte aus Beispiel 1 und Vergleichsbeispiel 1 sowie der weiteren Beispiele und Vergleichsbeispiele zusammenfassend dargestellt.

Tabelle 2

| Bezugszeichen | | Beispiel 1 | Beispiel 2 | Beispiel 3 | Vergleichsbeispiel 1 | Vergleichsbeispiel 2 | Beispiel 4 |
|---|---|---|---|---|---|---|---|
| 1 | Reaktor [L]: | 190 | 190 | 190 | 190 | 190 | 190 |
| 2 | Rührer [upm]: | 1000 | 1000 | 1000 | 600 | 1000 | 1000 |
| | [kW]: | 0,48 | 0,52 | 0.52 | 0,18 | 0,46 | 0,52 |
| | $P/V_R$ [W/L]: | 2,54 | 2,76 | 2,75 | 0,93 | 2,44 | 2,76 |
| | P/ Fluß$_{Susp}$ [Wh/L]: | 51 | 55 | 55 | 19 | 49 | 55 |
| 3 | T [°C]: | 50 | 50 | 50 | 50 | 50 | 50 |
| 4 | Umlauf [m³/h]: | 10 | 10 | 10 | 10 | 10 | 10 |
| 5 | Metallsalzlösung [g/h]: | 11223 | 22446 | 22446 | 6328 | 6328 | 21298 |
| | Ni[g/L]: | 79,9 | 79,9 | 79,9 | 79,9 | 79,9 | 98,4 |
| | Co [g/L]: | 20,1 | 20,1 | 20,1 | 20,1 | 20,1 | 1,69 |
| | Zn[g/L]: | 0,00 | 0,00 | 0,00 | 0,00 | 0,00 | 6,75 |
| 6 | Natronlauge [g/h]: | 7746 | 16148 | 16572 | 4367 | 4367 | 16033 |
| | NaOH [g/L]: | 200 | 200 | 200 | 200 | 200 | 200 |
| 7 | Ammoniak [g/h]: | 731 | 1492 | 1512 | 412 | 412 | 1434 |
| | $NH_3$[g/L]: | 225 | 225 | 225 | 225 | 225 | 225 |
| 8 | VE-Wasser [g/h]: | 0 | 0 | 0 | 0 | 0 | 0 |
| 12 | Mutterlauge [g/h]: | 8154 | 27556 | 28012 | 0 | 0 | 26202 |
| | NaOH[g/L]: | 4,8 | 8 | 10 | 4,8 | 4,8 | 8 |
| | $NH_3$ [g/L]: | 11 | 11 | 11 | 11 | 11 | 11 |
| 9 | Suspension [g/h]: | 11545 | 12529 | 12518 | 11107 | 11107 | 12563 |
| | Feststoff [g/L]: | 150 | 300 | 300 | 85 | 85 | 300 |
| | Verweilzeit [h]: | 20 | 20 | 20 | 20 | 20 | 20 |
| | Produktmenge [kg]: | 34,4 | 68,5 | 68,7 | 19,3 | 19,3 | 68,5 |
| | Restfeuchte [%]: | 0,44 | 0,20 | 0,46 | 0,19 | 0,16 | 0,21 |
| | Ni [%]: | 50,5 | 50,7 | 50,3 | 50,8 | 50,6 | 58,3 |
| | Co [%]: | 12,8 | 12,4 | 12,9 | 12,7 | 12,7 | 1,0 |
| | Zn [%]: | | | | | | 4,1 |
| | $D_{10}$ [μm]: | 1,4 | 0,8 | 0,7 | 5,8 | 4,6 | 0,5 |
| | $D_{50}$ [μm]: | 4,9 | 4,2 | 2,6 | 14,8 | 11,1 | 2,2 |

(fortgesetzt)

| Bezugszeichen | Beispiel 1 | Beispiel 2 | Beispiel 3 | Vergleichsbeispiel 1 | Vergleichsbeispiel 2 | Beispiel 4 |
|---|---|---|---|---|---|---|
| $D_{90}$ [μm]: | 9,7 | 8,6 | 5,4 | 26,2 | 19,9 | 4,8 |
| $D_{90}/D_{50}$: | 1,98 | 2,02 | 2,08 | 1,77 | 1,79 | 2,18 |
| Klopfdichte KD [g/cm$^3$]: | 2,22 | 2,18 | 2,17 | 2,28 | 2,24 | 2,11 |
| $KD/D_{50}$ [g/cm$^3$ · μm]: | 0,45 | 0,51 | 0,83 | 0,15 | 0,20 | 0,97 |
| BET [m$^2$/g]: | 7,3 | 6,4 | 12,8 | 14,9 | 9,2 | 13,8 |

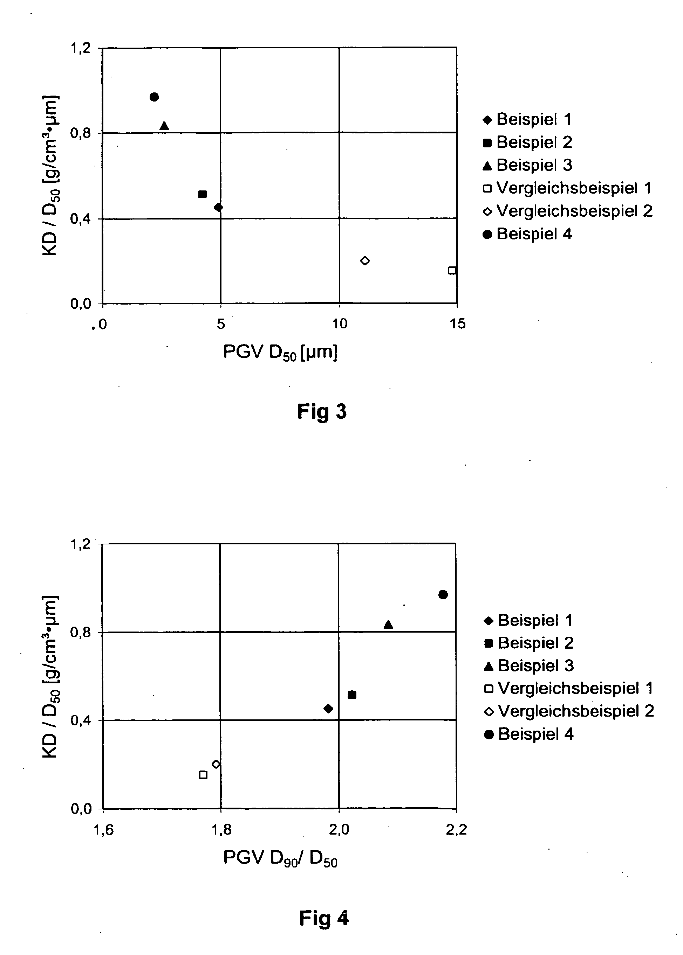

In Fig. 2 ist die Klopfdichte der gemäß Tabelle 2 präparierten Materialien gegen den $D_{50}$-Wert der Partikelgrößenverteilung aufgetragen. Es ist zu sehen, dass die Klopfdichte mit fallendem $D_{50}$-Wert ebenfalls abnimmt, trotzdem aber auf einem hohen Niveau von > 2.1 g/cm$^3$ bleibt. Eine Ursache hierfür liegt in der auch für diese kleinen Partikel hohen Sphäroidizität, wie auch die REM-Aufnahmen in Fig. 5 für Beispiel 1, Fig. 6 für Beispiel 2 und Fig. 7 für Beispiel 3 zeigen. In Fig. 3 ist das Verhältnis von Klopfdichte zu $D_{50}$-Wert gegen den $D_{50}$-Wert aufgetragen. Es nimmt mit fallendem $D_{50}$-Wert extrem stark zu, da die Klopfdichte der erfindungsgemäßen pulverförmigen Verbindungen nur schwach mit dem $D_{50}$-Wert abnimmt. In Fig. 4 schließlich ist das Verhältnis aus Klopfdichte und $D_{50}$-Wert gegen das Verhältnis aus $D_{90}$-Wert und $D_{50}$-Wert der Partikelgrößenverteilung aufgetragen. Es zeigt ein annähernd lineares Verhalten mit starker positiver Steigung. Das bedeutet also, dass die Breite der Partikelgrößenverteilung, welche das Verhältnis $D_{90}/D_{50}$ widerspiegelt, sich auf die Packungsdichte der Materialien dermaßen auswirkt, dass breite Partikelgrößenverteilungen zu höheren Packungsdichten führen. Hohe Packungsdichten allein sind jedoch nicht hinreichend für hohe Klopfdichten. Die Partikel selbst müssen auch ausreichend dicht sein, das heißt ihre innere Porosität darf nicht zu groß sein. Aus Tabelle 2 kann man entnehmen, dass die BET-Oberfläche der erfindungsgemäßen Pulver mehr als 10 m$^2$/g betragen kann und die Porosität sich offensichtlich nicht so stark erhöht, dass ein negativer Effekt auf die Klopfdichte resultiert. Daraus kann man schließen, dass die erfindungsgemäßen Pulver sehr feine Poren mit kleinem Durchmesser und hoher Oberfläche besitzen, das Porenvolumen selbst jedoch relativ klein ist. Um die hohe spezifische Oberfläche mit diesen feinen Poren zu erreichen, muss ihre Länge und ihre Anzahl besonders hoch sein. Damit eignen sich die erfindungsgemäßen Pulver besonders vorteilhaft für die Verwendung in Nickelmetallhydridbatterien, bei denen es auf hohe volumetrische Kapazität und gleichzeitig auf schnelle Ladung und Entladung ankommt. Dies ist insbesondere beim Einsatz von Nickelmetallhydridbatterien in Elektrofahrzeugen und Hybridfahrzeugen der Fall. Die charakteristischen Eigenschaften der pulverförmigen Verbindungen gemäß der Erfindung wie kleine Partikelgröße, sehr breite Partikelgrößenverteilung, hohes Verhältnis von Klopfdichte/$D_{50}$-Wert und trotz vergleichsweise hoher BET-Werte hohe Klopfdichten, resultieren aus der Kombination von großen Alkalilaugeüberschüssen (> 0.12mol/l), hoher Feststoffkonzentration und hohem mechanischen Leistungseintrag. Durch Anpassung dieser Verfahrensparameter werden pulverförmige Verbindungen gemäß der Erfindung mit Klopfdichten von > 2.3 g/cm$^3$ oder sogar > 2.4 g/cm$^3$ für Partikelgrößen der mit $D_{50}$-Werten von < 3 μm hergestellt. Dabei erreicht das Verhältnis Klopfdichte zu $D_{50}$-Wert sogar Werte größer 1.0.

**Patentansprüche**

1. Pulverförmige Verbindung der Formel $Ni_aM_bO_x(OH)_y$, wobei M ein Element ausgewählt aus der Gruppe bestehend aus Fe, Co, Zn, Mn, Al, Mg, Ca, Sr, La, Ce, Y, Yb und/oder deren Mischungen bedeutet, mit $0.6 \leq a < 1$, $0 < b \leq 0.4$, $0 < x \leq 0.60$ und $1.4 \leq y < 2$, **dadurch gekennzeichnet, dass** der $D_{50}$-Wert der Partikelgrößenverteilung, gemessen nach ASTM B 822, < 5 μm, und das Verhältnis von Klopfdichte, gemessen nach ASTM B 527, zu $D_{50}$-Wert der Partikelgrößenverteilung mindestens 0.4 g/cm$^3$ ·μm betragen.

2. Pulverförmige Verbindung gemäß Anspruch 1, **dadurch gekennzeichnet, dass** der $D_{50}$-Wert der Partikelgrößenverteilung < 3 μm beträgt.

3. Pulverförmige Verbindungen gemäß Anspruch 1 oder 2, **dadurch gekennzeichnet, dass** das Verhältnis der Klopfdichte zu $D_{50}$- Wert der Partikelgrößenverteilung mindestens 0.6 g/cm$^3$ · μm beträgt.

4. Pulverförmige Verbindungen gemäß Anspruch 1 oder 2, **dadurch gekennzeichnet, dass** das Verhältnis der Klopfdichte zu $D_{50}$- Wert der Partikelgrößenverteilung mindestens 0.8 g/cm$^3$ · μm beträgt.

5. Pulverförmige Verbindung gemäß mindestens einem der Ansprüche 1 bis 4, **dadurch gekennzeichnet, dass** die BET - Oberfläche, gemessen nach ASM D 3663 mindestens 5 m$^2$/g ist.

6. Pulverförmige Verbindung gemäß mindestens einem der Ansprüche 1 bis 4, **dadurch gekennzeichnet, dass** die BET - Oberfläche, gemessen nach ASM D 3663 mindestens 10 m$^2$/g ist.

7. Pulverförmige Verbindung gemäß mindestens einem der Ansprüche 1 bis 6, **dadurch gekennzeichnet, dass** die normierte Breite der Korngrößenverteilung, definiert als Verhältnis von $D_{90}/D_{50}$, worin D Durchmesser der Pulverpartikel bedeutet, mindestens 1.8 beträgt.

8. Pulverförmige Verbindung gemäß mindestens einem der Ansprüche 1 bis 6, **dadurch gekennzeichnet, dass** die normierte Breite der Korngrößenverteilung, definiert als Verhältnis von $D_{90}/D_{50}$, worin D Durchmesser der Pulverpartikel bedeutet, mindestens 2.0 beträgt.

**9.** Pulverförmige Verbindung gemäß mindestens einem der Ansprüche 1 bis 8, **dadurch gekennzeichnet, dass** die Partikel sphäroidische Form aufweisen.

**10.** Pulverförmige Verbindung gemäß mindestens einem der Ansprüche 1 bis 9, **dadurch gekennzeichnet, dass** die Partikel einen Formfaktor von $\geq$ 0.8 aufweisen.

**11.** Pulverförmige Verbindung gemäß mindestens einem der Ansprüche 1 bis 9, **dadurch gekennzeichnet, dass** die Partikel einen Formfaktor von $\geq$ 0.9 aufweisen.

**12.** Verfahren zur Herstellung der pulverförmigen Verbindung gemäß wenigstens einem der Ansprüche 1 bis 11 bestehend aus folgenden Schritten:

> a) Bereitstellen von mindestens einer ersten und einer zweiten Eduktlösung,
> b) Zusammenführen von mindestens der ersten und der zweiten Eduktlösung in einem Reaktor und Erzeugung einer homogen durchmischten Reaktionszone mit einem spezifischen mechanischen Leistungseintrag von mindestens 2 Watt/Liter und Erzeugung einer Produktsuspension, bestehend aus unlöslichem Produkt und einer durch Einstellung eines Laugenüberschusses übersättigten Mutterlauge mit einem Laugenüberschuss von mindestens 0.12mol/l.
> c) Partielle Abtrennung der Mutterlauge vom ausgefällten Produkt zur Einstellung von Feststoffgehalten von mindestens 150 g/l in der Suspension durch Klär-, oder Filterelemente.

**13.** Verfahren nach Anspruch 12, **dadurch gekennzeichnet, dass** der Feststoffgehalt in der Suspension mindestens 225 g/l beträgt.

**14.** Verfahren nach Anspruch 12, **dadurch gekennzeichnet, dass** der Feststoffgehalt in der Suspension mindestens 300 g/l beträgt.

**15.** Verfahren nach Anspruch 12, **dadurch gekennzeichnet, dass** die Konzentration der Alkalilauge mindestens 0.25 mol/l beträgt.

**16.** Verfahren nach Anspruch 12, **dadurch gekennzeichnet, dass** der spezifische mechanische Leistungseintrag mindestens 2.5 W/l beträgt.

**17.** Verwendung der pulverförmigen Verbindung gemäß mindestens einem der Ansprüche 1 bis 11 als Aktivmaterial für Nickelmetallhydridbatterien.

**18.** Nickelmetallhydridbatterien, enthaltend pulverförmige Verbindung gemäß mindestens einem der Ansprüche 1 - 11.

**19.** Verwendung der Nickelmetallhydridbatterien gemäß Anspruch 17 zum Einsatz für Hybrid- und Elektrofahrzeuge, Solarmobile sowie In mit Brennstoffzellen betriebenen Fahrzeugen.

**20.** Verwendung der pulverförmigen Verbindung gemäß mindestens einem der Ansprüche 1 bis 11 als Vorstoff zur Herstellung von Lithiumverbindungen für Lithium-Sekundärbatterien.

**Claims**

**1.** Pulverulent compound of the formula $Ni_aM_bO_x(OH)_y$ where M is an element selected from the group consisting of Fe, Co, Zn, Mn, Al, Mg, Ca, Sr, La, Ce, Y, Yb and mixtures thereof, with $0.6 \leq a < 1$, $0 < b \leq 0.4$, $0 < x \leq 0.60$ and $1.4 \leq y < 2$, **characterized in that** the $D_{50}$ of the particle size distribution, measured in accordance with ASTM B 822, is < 5 $\mu$m and the ratio of tapped density, measured in accordance with ASTM B 527, to the $D_{50}$ of the particle size distribution is at least 0.4 g/cm$^3 \cdot \mu$m.

**2.** Pulverulent compound according to Claim 1, **characterized in that** the $D_{50}$ of the particle size distribution is < 3 $\mu$m.

**3.** Pulverulent compounds according to Claim 1 or 2, **characterized in that** the ratio of the tapped density to the $D_{50}$ of the particle size distribution is at least 0.6 g/cm$^3$ $\mu$m.

4. Pulverulent compounds according to Claim 1 or 2, **characterized in that** the ratio of the tapped density to the $D_{50}$ of the particle size distribution is at least 0.8 g/cm$^3 \cdot \mu$m.

5. Pulverulent compound according to at least one of Claims 1 to 4, **characterized in that** the BET surface area measured in accordance with ASTM D 3663 is at least 5 m$^2$/g.

6. Pulverulent compound according to at least one of Claims 1 to 4, **characterized in that** the BET surface area measured in accordance with ASTM D 3663 is at least 10 m$^2$/g.

7. Pulverulent compound according to at least one of Claims 1 to 6, **characterized in that** the normalized width of the particle size distribution, defined as the ratio of $D_{90}/D_{50}$, where D is the diameter of the powder particles, is at least 1.8.

8. Pulverulent compound according to at least one of Claims 1 to 6, **characterized in that** the normalized width of the particle size distribution, defined as the ratio of $D_{90}/D_{50}$, where D is the diameter of the powder particles, is at least 2.0.

9. Pulverulent compound according to at least one of Claims 1 to 8, **characterized in that** the particles have a spheroidal shape.

10. Pulverulent compound according to at least one of Claims 1 to 9, **characterized in that** the particles have a shape factor of $\geq$ 0.8.

11. Pulverulent compound according to at least one of Claims 1 to 9, **characterized in that** the particles have a shape factor of $\geq$ 0.9.

12. Process for preparing the pulverulent compound according to at least one of Claims 1 to 11, which comprises the following steps:

    a) provision of at least one first starting solution and at least one second starting solution,
    b) combination of at least the first starting solution and the second starting solution in a reactor and generation of a homogeneously mixed reaction zone using a specific mechanical power input of at least 2 watt/litre and production of a product suspension comprising insoluble product and a mother liquor which has been supersaturated by setting of an excess of alkali of at least 0.12 mol/l,
    c) partial separation of the mother liquor from the precipitated product to set solids contents of at least 150 g/l in the suspension by means of clarification or filter elements.

13. Process according to Claim 12, **characterized in that** the solids content in the suspension is at least 225 g/l.

14. Process according to Claim 12, **characterized in that** the solids content in the suspension is at least 300 g/l.

15. Process according to Claim 12, **characterized in that** the concentration of the alkali metal hydroxide solution is at least 0.25 mol/l.

16. Process according to Claim 12, **characterized in that** the specific mechanical power input is at least 2.5 W/l.

17. Use of the pulverulent compound according to at least one of Claims 1 to 11 as active material for nickel metal hydride batteries.

18. Nickel metal hydride batteries containing a pulverulent compound according to at least one of Claims 1-11.

19. Use of the nickel metal hydride batteries according to Claim 17 in hybrid and electric vehicles, solar vehicles and in vehicles operated using fuel cells.

20. Use of the pulverulent compound according to at least one of Claims 1 to 11 as precursor for the preparation of lithium compounds for secondary lithium batteries.

**Revendications**

1. Composé sous forme de poudre de formule $Ni_aM_bO_x(OH)_y$, M signifiant un élément choisi dans le groupe constitué par Fe, Co, Zn, Mn, Al, Mg, Ca, Sr, La, Ce, Y, Yb et/ou leurs mélanges, $0,6 \leq a < 1$, $0 < b \leq 0,4$, $0 < x \leq 0,60$ et $1,4 \leq y < 2$, **caractérisé en ce que** la valeur $D_{50}$ de la répartition des tailles des particules, mesurée selon la norme ASTM B 822, est < 5 $\mu$m, et le rapport de la densité tassée, mesurée selon la norme ASTM B 527, à la valeur $D_{50}$ de la répartition des tailles des particules vaut au moins 0,4 $g/cm^3.\mu$m.

2. Composé sous forme de poudre selon la revendication 1, **caractérisé en ce que** la valeur $D_{50}$ de la répartition des tailles des particules est < 3 $\mu$m.

3. Composés sous forme de poudre selon la revendication 1 ou 2, **caractérisés en ce que** le rapport de la densité tassée à la valeur $D_{50}$ de la répartition des tailles des particules vaut au moins 0,6 $g/cm^3.\mu$m.

4. Composés sous forme de poudre selon la revendication 1 ou 2, **caractérisés en ce que** le rapport de la densité tassée à la valeur $D_{50}$ de la répartition des tailles des particules vaut au moins 0,8 $g/cm^3.\mu$m.

5. Composé sous forme de poudre selon au moins l'une quelconque des revendications 1 à 4, **caractérisé en ce que** la surface BET, mesurée selon la norme ASTM D 3663, vaut au moins 5 $m^2/g$.

6. Composé sous forme de poudre selon au moins l'une quelconque des revendications 1 à 4, **caractérisé en ce que** la surface BET, mesurée selon la norme ASTM D 3663, vaut au moins 10 $m^2/g$.

7. Composé sous forme de poudre selon au moins l'une quelconque des revendications 1 à 6, **caractérisé en ce que** la largeur normalisée de la répartition de la taille des grains, définie par le rapport $D_{90}/D_{50}$, D signifiant le diamètre des particules de poudre, vaut au moins 1,8.

8. Composé sous forme de poudre selon au moins l'une quelconque des revendications 1 à 6, **caractérisé en ce que** la largeur normalisée de la répartition des tailles des particules, définie par le rapport $D_{90}/D_{50}$, D signifiant le diamètre des particules de poudre, vaut au moins 2,0.

9. Composé sous forme de poudre selon au moins l'une quelconque des revendications 1 à 8, **caractérisé en ce que** les particules présentent une forme sphéroïde.

10. Composé sous forme de poudre selon au moins l'une quelconque des revendications 1 à 9, **caractérisé en ce que** les particules présentent un facteur de forme $\geq 0,8$.

11. Composé sous forme de poudre selon au moins l'une quelconque des revendications 1 à 9, **caractérisé en ce que** les particules présentent un facteur de forme $\geq 0,9$.

12. Procédé pour la préparation du composé sous forme de poudre selon au moins l'une quelconque des revendications 1 à 11, constitué par les étapes suivantes :

   a) mise à disposition d'au moins une première et d'une deuxième solution de départ,
   b) réunion de ladite au moins une première et de la deuxième solution de départ dans un réacteur et génération d'une zone de réaction mélangée de manière homogène par une introduction de puissance mécanique spécifique d'au moins 2 Watts/litre et génération d'une suspension de produit, constituée par un produit insoluble et une lessive-mère sursaturée par réglage d'un excès de lessive, présentant un excès de lessive d'au moins 0,12 mole/l,
   c) séparation partielle de la lessive-mère du produit précipité pour le réglage de teneurs en solides d'au moins 150 g/l dans la suspension par des éléments de clarification ou de filtration.

13. Procédé selon la revendication 12, **caractérisé en ce que** la teneur en solides dans la suspension est d'au moins 225 g/l.

14. Procédé selon la revendication 12, **caractérisé en ce que** la teneur en solides dans la suspension est d'au moins 300 g/l.

**15.** Procédé selon la revendication 12, **caractérisé en ce que** la concentration de la lessive alcaline est d'au moins 0,25 mole/l.

**16.** Procédé selon la revendication 12, **caractérisé en ce que** l'introduction de puissance mécanique spécifique est d'au moins 2,5 W/l.

**17.** Utilisation du composé sous forme de poudre selon au moins l'une quelconque des revendications 1 à 11 comme matériau actif pour des batteries nickel-hydrure métallique.

**18.** Batteries nickel-hydrure métallique, contenant un composé sous forme de poudre selon au moins l'une quelconque des revendications 1 à 11.

**19.** Utilisation de batteries nickel-hydrure métallique selon la revendication 17 pour une utilisation pour des véhicules hybrides et électriques, les téléphones mobiles solaires et dans les véhicules entraînés par des piles à combustible.

**20.** Utilisation du composé sous forme de poudre selon au moins l'une quelconque des revendications 1 à 11 comme précurseur pour la préparation de composés à base de lithium pour des batteries secondaires à lithium.

**Fig 1**

**Fig 2**

**Fig 3**

**Fig 4**

**Fig 5** ——— 15 µm

**Fig 6** ——— 15 µm

**Fig 7** ——— 15 µm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10027611 A
- US 20020053663 A1
- US 20020053663 A
- US 20030054251 A1

- WO 003004418 A
- JP 10097856 A
- US 5476530 A

**In der Beschreibung aufgeführte Nicht-Patentliteratur**

- **FIERRO et al.** *J. Electrochem. Soc.,* 2006, vol. 153 (3), A492-A496